# EUROPÄISCHE PATENTANMELDUNG

(11) **EP 1 085 415 A2**
(43) Veröffentlichungstag der Anmeldung: **21.03.2001**
(21) Anmeldenummer: 00440236.8
(22) Anmeldetag: 01.09.2000
(51) Int. Cl.: G06F 11/16

(54) **Programmodul und Verfahren zum Erhöhen der Sicherheit eines softwaregesteuerten Systems**

(30) Priorität: 09.09.1999 DE 19942981
(71) Anmelder: ALCATEL, 75008 Paris (FR)
(72) Erfinder: Uebel, Helmut, 71229 Leonberg (DE)
(74) Vertreter: Menzietti, Domenico, Dipl.-Ing

(57) **Zusammenfassung**

Aufgabe der Eindung ist es, die Sicherheit eines softwaregesteurten Systems, insbesondere eines elektronischen Stellwerkes für die Eisenbahnsignaltechnik zu erhöhen, ohne den Aufwand der Lösung mit diversitärer Software zu betreiben und ohne die Verfügbarkeit des Systems zu erniedrigen. Die Erfindung löst diese Aufgabe durch ein Programmodul und ein Verfahren, bei dem in einem ersten Schritt mittels eines ersten Programms aus Eingangsdaten Ausgangsdaten ermittelt werden und in einem zweiten Schritt eine Überprüfung nur eines Teils der Ausgangsdaten durch ein zweites Programm durchgeführt wird, das gegenüber dem ersten Programm in einer anderen Logik und für eine andere Funktion implementiert ist.

## Beschreibung

Die Erfindung bezieht sich auf ein Programmodul und ein Verfahren zum Erhöhen der Sicherheit eines softwaregesteuerten Systems.

Die Sicherheit von softwaregesteuerten Systemen wird insbesondere im Personenverkehr gefordert. Dazu zählt insbesondere die Eisenbahnsignaltechnik. In elektronischen Stellwerken, Betriebszentralen und bei der Linienzugbeeinflussung sind bereits mehrere Lösungen zur Erhöhung der Sicherheit bekannt.

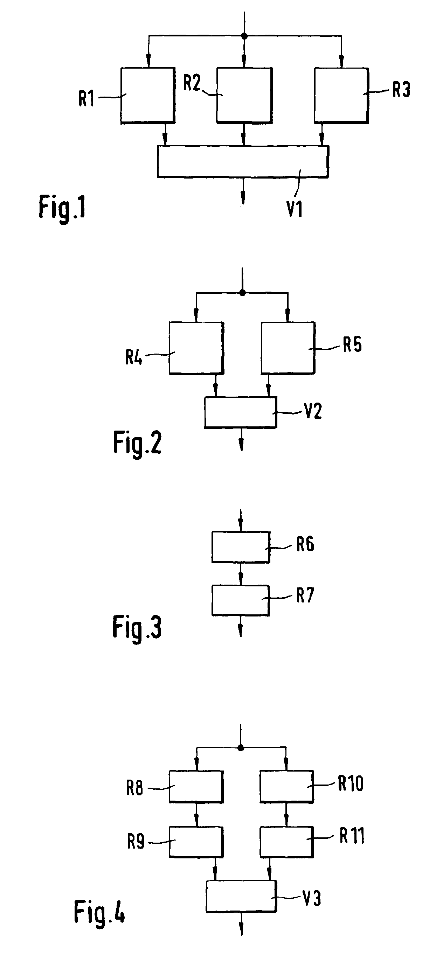

In Fig. 1 ist eine Lösungsmöglichkeit dargestellt. Fig. 1 zeigt einen Rechnerverbund aus drei Rechnern. Die Rechner R1, R2, R3 sind parallel geschaltet. Ihre Eingänge erhalten die gleichen Eingangsdaten. Ihre Ausgänge sind mit einem Vergleicher V1 verbunden. Der Vergleicher V1 hat die Aufgabe die Ausgangsdaten der drei Rechner R1, R2, R3 miteinander zu vergleichen. Stimmen die Ausgangsdaten von mindestens zwei oder zwingend allen drei Rechnern R1, R2, R3 überein, so werden Ausgabekommandos an die Elemente im Feld generiert. Anstelle in einem Vergleicher können die Rechner R1, R2, R3 ihre Ergebnisse alternativ auch selbst untereinander vergleichen. Diese Möglichkeit deckt die in den Rechnern R1, R2, R3 auftretenden Gerätefehler ab, nicht jedoch falsche Programmierung der Rechner R1, R2, R3, da die Programme in den parallel arbeitenden Rechnern R1, R2, R3 identisch sind und deshalb zum gleichen falschen Ergebnis führen würden.

Eine zweite Möglichkeit ist in Fig. 2 dargestellt. Fig. 2 zeigt einen Rechnerverbund aus zwei Rechnern. Die Rechner R3, R4 sind parallel geschaltet. Ihre Eingänge erhalten die gleichen Eingangsdaten. Ihre Ausgänge sind mit einem Vergleicher V2 verbunden. Der Vergleicher V2 hat die Aufgabe die Ausgangsdaten der drei Rechner R3, R4 miteinander zu vergleichen. Stimmen die Ausgangsdaten der Rechnern R3, R4 überein, so werden Ausgabekommandos an die Elemente im Feld generiert. Anstelle in einem Vergleicher können die Rechner R3, R4 ihre Ergebnisse alternativ auch selbst untereinander vergleichen. Rechner R3 und Rechner R4 sind mit unterschiedlichen Softwareprogrammen programmiert. Diese Softwareprogramme erfüllen allerdings die gleiche Funktion, nämlich die Ermittlung bestimmter Ausgangsdaten aus Eingangsdaten. Die Ausgangsdaten enthalten z.B. Informationen über die Weichenlagen für einen bestimmten Fahrweg. Diese auch als diversitäre Programmierung bezeichnete Lösungsmöglichkeit ist zwar bei gleicher Qualität der einzelnen Programmpakete sicherer, jedoch ist erstens der Erstellungsaufwand für zwei unterschiedliche Softwarepakete gleichen Umfangs und gleicher Leistungsfähigkeit sehr hoch. Zum anderen führen geringe Ungleichheiten zu Fehlvergleichen und damit zu Fehlfunktionen oder sogar Stillstand des gesamten Stellwerksystems.

Aufgabe der Eindung ist es, die Sicherheit eines elektronischen Systems zu erhöhen, ohne den Aufwand der Lösung mit diversitärer Software zu betreiben und ohne die Verfügbarkeit des Systems zu erniedrigen.

Gelöst wird diese Aufgabe durch ein Programmodul nach Anspruch 1 und ein Verfahren nach Anspruch 9. Das Programmodul ist insbesondere dadurch gekennzeichnet, daß es einen ersten und einen zweiten Programmteil beinhaltet, die in unterschiedlicher Logik und für unterschiedliche Funktionen implementiert sind, wobei der erste Programmteil als ausführendes Programm ausgelegt ist und geeignet ist, aus einer Anzahl von Eingangsdaten eine Anzahl von Ausgangsdaten zu ermitteln und der zweite Programmteil als kontrollierendes Programm ausgelegt ist und geeignet ist, nur Teile der Ausgangsdaten zu überprüfen. Das erfindungsgemäße Programmodul arbeitet sequentiell. Das Programmodul ist insbesondere geeignet für den Einsatz in einem elektronischen Stellwerk, einer Betriebszentrale und bei der Linienzugbeeinflussung. Die Sicherheit eines Stellwerkes ist nie absolut. Die Rate der unsicheren Zustände muß aber hinreichend gering sein. Die Fehlervermeidung muß deshalb auch nicht absolut sein, sondern sie muß einen hohen Prozentsatz der auftretenden gefährlichen Fehler abdecken. Aus diesem Grund soll vermieden werden, das zweite diversitäre Softwarepaket, d.h. den zweiten Programmteil, so umfangsreich zu machen, daß er alle Funktionen des ersten Programmteils überprüft. Zur Erreichung eines hohen Sicherheitsstandards ist es ausreichend, die wichtigsten Funktionen zu überprüfen, die im Fehlerfall unfallträchtige Situationen heraufbeschwören. Selten vorkommende Betriebssituationen, die einen hohen Programmieraufwand erfordern und nur wenig zur Unfallwahrscheinlichkeit beitragen, sollen bei dem zweiten Programmteil nicht berücksichtigt werden. Der zweite Programmteil ist auf die wesentlichen Grundfunktionen der Stellwerkstechnik beschränkt. So entfällt auch das zeit- und kostenaufwendige Anpassen auf die ländespezifischen Gegebenheiten. Die elementaren Grundfunktionen eines Stellwerkes sind in allen Ländern gleich. Dies ermöglicht einen ausreichenden Schutz gegen Fehler bei der Softwareerstellung und der Projektierung. Der Aufwand für den zweiten Programmteil beschränkt sich beispielsweise auf zehn Prozent des gesamten Software-Erstellungsaufwands und ist zudem nicht länderspezifisch, so daß er nur einmalig erstellt werden muß.

Die beiden Programmteile, der erste, ausführende Programmteil und der zweite, kontrollierende Programmteil sind unterschiedlich erstellt. Der erste Programmteil ist vorteilhafterweise in Tabellenlogik erstellt, der zweite Programmteil vorteilhafterweise in Spurplanlogik. Die beiden Programmteile laufen sequentiell ab. Der kontrollierende Programmteil überprüft die Richtigkeit eines Teils der Ergebnisses des ausführenden Programmteils. Es ist Aufgabe des ausführenden Programmteils bei der Einstellung einer Fahrstraße die Zulässigkeit zu prüfen und die Elemente alle in die richtige Position zu bringen. Anschließend ist die Aufgabe des ausführenden Programmteils abgeschlossen und er übergibt die Bereitschaft zur Stellung des Signals auf Fahrt an den kontrollierenden Programmteil. Dieser überprüft auf vorteilhafte Art und Weise beginnend beim Zielsignal, ob auf dem einzustellenden Fahrweg keine Belegungen sind und ob die Weichen in der richtigen Stellung liegen. Dazu kann nach dem Spurplanprinzip vom Zielsignal entsprechend der Gleistopologie und den Weichenstellungen bis zum Startsignal zurückgegangen werden. Beim richtigen Erreichen des Startsignals wird die Erlaubnis zu dessen Fahrtstellung gegeben.

Die beschriebene unterste Stufe der Überprüfung, nämlich nur der Belegung und der Weichenlagen, ist in jedem denkbaren Stellwerkskonzept identisch. Darüber hinausgehende Funktionalitäten könnten zum Teil länderspezifisch sein, was bei der praktischen Ausführung zu prüfen ist. Erweiterungen dieses Grundgedanken könnten sein: Überprüfung der Festlegung der Weichen des Fahrweges, Überprüfung der Geschwindigkeiten des Fahrweges und Minimumbildung zur Kontrolle des richtigen Geschwindigkeitsbegriffs am Startsignal, Überprüfung sonstiger Fahrwegelemente wie z.B. des Geschlossenseins von Bahnübergängen.

Überprüfung von Elementen, die nicht im Fahrweg liegen, ist beim kontrollierenden Programmteil nicht vorgesehen. So sind z.B. die Stellungen der Flankenschutzweichen nicht zu überprüfen. Damit läßt sich zwar nicht eine vollständige Abdeckung von Fehlern des ausführenden Programmteils und damit keine vollständige Unfallvermeidung erreichen, die Wahrscheinlichkeit für solche Unfälle ist jedoch sehr gering, da nur die Kombination aus Fehler im ausführenden Programmteil, Fahren eines zweiten Zuges und signalwidriges Verhalten des zweiten Zuges zu einer Gefährdung führen könnte.

Auf diese Art und Weise ist es möglich den kontrollierenden Programmteil einfach und aufwandsarm zu gestalten. Die beiden Programmteile können sequentiell im gleichen Rechner ablaufen. Der Erstellungsaufwand ist insbesondere für den zweiten Programmteil gering, da eine länderspezifische Anpassung auf Grund der in allen Ländern gleichen Stellwerksfunktion entfällt.

Die Erfindung offenbart somit auch ein Verfahren zum Erhöhen der Sicherheit eines softwaregesteuerten Systems, bei dem in einem ersten Schritt mittels eines ersten Programms aus Eingangsdaten Ausgangsdaten ermittelt werden und in einem zweiten Schritt eine Überprüfung nur eines Teils der Ausgangsdaten durch ein zweites Programm durchgeführt wird, das gegenüber dem ersten Programm in einer anderen Logik und für eine andere Funktion implementiert ist.

Der erste und/oder der zweite Programmteil des Programmoduls können auf einem Speichermedium abgespeichert werden. Als Speichermedium kann ein Datenträger, wie Diskette, Magnetband oder dergleichen verwendet werden.

Zwei Ausführungsbeispiele der Erfindung werden im folgenden unter Zuhilfenahme der Figuren 3 und 4 erläutert. Es zeigen:
- Fig. 3: eine schematische Darstellung eines ersten erfindungsgemäßen Rechnerverbundes für ein elektronisches Stellwerk und
- Fig. 4: eine schematische Darstellung eines zweiten erfindungsgemäßen Rechnerverbundes für ein elektronisches Stellwerk.

Das erste Ausführungsbeispiel wird nun unter Zuhilfenahme von Fig. 3 erläutert. Fig. 3 zeigt einen erfindungsgemäßen Rechnerverbund eines elektronischen Stellwerkes. Der Rechnerverbund beinhaltet zwei Rechner R6 und R7. Auf dem Rechner R6 ist ein erster Programmteil eines Programmoduls installiert. Auf dem Rechner R7 ist ein zweiter Programmteil des Programmoduls installiert. Der erste Programmteil ist in Tabellenlogik implementiert, der zweite in Spurplanlogik. Der erste Programmteil dient als ausführendes Programm, der zweite als kontrollierendes Programm. Beide Programmteile laufen sequentiell ab, zunächst das ausführende, anschließend das kontrollierende. Der Rechnerverbund erhält Eingangsdaten aus denen er Ausgangsdaten ermitteln soll. Die Eingangsdaten enthalten beispielsweise Start- und Zielpunkt eines Zuges, den gewünschten Fahrweg sowie gewünschte Startbedingungen. Aufgabe des Rechnerverbundes ist es, einen möglichst sicheren Fahrweg für den Zug zu ermitteln. Die Ausgangsdaten enthalten beispielsweise Startbedingungen, Weichenstellungen, Bahnübergangschließungen, Flankenschutzweichenstellungen, Geschwindigkeiten für den freizugebenden Fahrweg.

Die Eingangsdaten werden Rechner R6 zugeführt, der den kompletten Satz der Fahrwegdaten ermittelt. Diese werden Rechner R7 zugeführt, der nur einen Teil dieser Daten überprüft. Rechner R7 überprüft nur die hauptsächlichen, im Fehlerfall unfallträchtigen Daten. Rechner R7 überprüft beispielsweise lediglich die Weichenstellungen und die Belegungen des Fahrweges. Dazu verwendet Rechner R7 das Spurplanprinzip. Ausgehend vom Zielpunkt werden die Weichenstellungen entsprechend der Gleistopologie bis zum Startpunkt des Zuges zurückverfolgt. Beim richtigen Erreichen des Startpunktes wird die Erlaubnis für den ermittelten Fahrweg gegeben. Die Ausgangsdaten werden zu den Elementen im Feld übertragen.

Anstelle eines Rechnerverbundes mit zwei Rechnern kann alternativ auch nur ein Rechner vorgesehen sein, auf dem dann beide Programmteile, d.h. das gesamte Programmodul, installiert sind.

Das zweite Ausführungsbeispiel wird nun unter Zuhilfenahme von Fig. 4 erläutert. Fig. 4 zeigt einen erfindungsgemäßen Rechnerverbund. Der Rechnerverbund beinhaltet vier Rechner R8, R9, R10, R11 und einen Vergleicher V3. Die Rechner R8 und R9 sind in Reihe geschaltet. Aufgabe und Funktion der Rechner R8 und R9 entsprechen dem Aufbau und der Funktion der Rechner R6 und R7 aus Fig. 3. Die Rechner R10 und R11 sind in Reihe geschaltet. Aufgabe und Funktion der Rechner R10 und R11 entsprechen dem Aufbau und der Funktion der Rechner R6 und R7 aus Fig. 3. Die Rechner R10 und R11 sind den Rechnern R8 und R9 parallel geschaltet. Auf den Rechnern R8 und R10 ist jeweils der erste Programmteil des erfindungsgemäßen Programmoduls installiert. Auf den Rechnern R9 und R11 ist jeweils der zweite Programmteil des erfindungsgemäßen Programmoduls installiert. Beide Rechner R8 und R10 erhalten die gleichen Eingangsdaten, aus denen mittels der gleichen Software die gleichen Ausgangsdaten ermittelt werden. Die Ausgangsdaten des Rechners R8 werden im Rechner R9 überprüft, die Ausgangsdaten des Rechners R10 im Rechner R11. Zusätzlich werden die Ausgangsdaten der Rechner R9 und R11 im Vergleicher V3 überprüft. Nur wenn die Ausgangsdaten der Rechner R9 und R11 übereinstimmen wird der Fahrweg freigeschaltet. Dadurch wird eine erhöhte Sicherheit erreicht. So können z.B. auch Gerätefehler in einem der Rechner R8 bis R11 entdeckt werden.

Anstelle des Vergleichers V3 können die Rechner R9 und R11 ihre Ausgangsdaten selbst untereinander vergleichen.

## Patentansprüche

1. Programmmodul beinhaltend einen ersten und einen zweiten Programmteil, die in unterschiedlicher Logik und für unterschiedliche Funktionen implementiert sind, wobei der erste Programmteil als ausführendes Programm ausgelegt ist und geeignet ist, aus einer Anzahl von Eingangsdaten eine Anzahl von Ausgangsdaten zu ermitteln und der zweite Programmteil als kontrollierendes Programm ausgelegt ist und geeignet ist, nur Teile der Ausgangsdaten zu überprüfen.

2. Programmmodul nach Anspruch 1, dadurch gekennzeichnet, daß der erste Programmteil in Tabellenlogik und der zweite Programmteil in Spurplanlogik implementiert ist.

3. Programmmodul nach Anspruch 1, dadurch gekennzeichnet, daß der zweite Programmteil geeignet ist, die Überprüfung der Teile der Ausgangsdaten durch Ermittlung der entsprechenden Eingangsdaten aus diesen Ausgangsdaten durchzuführen.

4. Programmmodul nach Anspruch 1, dadurch gekennzeichnet, daß der zweite Programmteil geeignet ist, zu überprüfen, ob auf einem einzustellenden Fahrweg keine Belegungen sind und ob die entsprechenden Weichen in der richtigen Stellung stehen.

5. Rechner (R6, R7, R8, R9, R10, R11) eines elektronischen Stellwerkes, beinhaltend den ersten und/oder den zweiten Programmteil des Programmmoduls nach Anspruch 1.

6. Rechnerverbund eines elektronischen Stellwerkes oder einer Betriebszentrale, beinhaltend ein Programmmodul nach Anspruch 1, dadurch gekennzeichnet, daß der Rechnerverbund mindestens zwei Rechner aufweist, daß der erste Programmteil auf einem ersten Rechner (R6, R8) und der zweite Programmteil auf einem zweiten Rechner (R7, R9) installiert ist, und daß der zweite Rechner (R7, R9) dem ersten Rechner (R6, R8) nachgeschaltet ist.

7. Rechnerverbund nach Anspruch 6, dadurch gekennzeichnet, daß der erste Programmteil zusätzlich auf einem dritten Rechner (R10) und der zweite Programmteil zusätzlich auf einem vierten Rechner (R11) installiert ist, daß der vierte Rechner (R11) dem dritten Rechner (R10) nachgeschaltet ist, und daß der dritte (R10) und der vierte Rechner (R11) dem ersten (R8) und zweiten Rechner (R9) parallel geschaltet ist.

8. Speichermedium, dadurch gekennzeichnet, das auf dem Speichermedium der erste und/oder der zweite Programmteil des Programmoduls nach Anspruch 1 abgespeichert ist.

9. Verfahren zum Erhöhen der Sicherheit eines softwaregesteuerten Systems, bei dem in einem ersten Schritt mittels eines ersten Programms aus Eingangsdaten Ausgangsdaten ermittelt werden und in einem zweiten Schritt eine Überprüfung nur eines Teils der Ausgangsdaten durch ein zweites Programm durchgeführt wird, das gegenüber dem ersten Programm in einer anderen Logik und für eine andere Funktion implementiert ist.
